# EUROPEAN PATENT APPLICATION

(11) **EP 4 835 021 A1**
(43) Date of publication of application: **04.11.2026**
(21) Application number: 24911814.2
(22) Date of filing: 27.06.2024
(51) Int. Cl.: C09D 133/04, B32B 29/00, C09D 5/00, C09D 7/65, D21H 27/30

(54) **AQUEOUS BARRIER COATING AGENT AND COATED PAPER**

(30) Priority: 27.12.2023 JP 2023221882
(71) Applicant: Harima Chemicals, Incorporated, Kakogawa-shi, Hyogo 675-0019 (JP)
(72) Inventor: FUJIMOTO Wakako, Kakogawa-shi, Hyogo 675-0019 (JP); HAYASHI Shunsuke, Kakogawa-shi, Hyogo 675-0019 (JP); FUNAKOSHI Haruka, Kakogawa-shi, Hyogo 675-0019 (JP); KITAJIMA Hiroomi, Kakogawa-shi, Hyogo 675-0019 (JP)
(74) Representative: SSM Sandmair
(86) International application number: PCT/JP2024/023347
(87) International publication number: WO 2025/141915

(57) **Abstract**

An aqueous barrier coating agent contains a polymer of a polymerization component containing (meth)acrylamide, (meth)acrylate having a straight-chain or branched alkyl group having 4 or more carbon atoms, styrenes and/or (meth)acrylate having a cyclic alkyl group, and a carboxyl group-containing vinyl monomer. A mass ratio of the (meth)acrylate having a straight-chain or branched alkyl group having 4 or more carbon atoms with respect to the (meth)acrylamide is 8.3 or more and 27.0 or less.

## Description

The present invention relates to an aqueous barrier coating agent and coated paper.

### BACKGROUND ART

In recent years, from the viewpoint of reducing the consumption of plastic, it has been considered to use paper instead of plastic.

However, paper has low oil resistance. Therefore, from the viewpoint of imparting oil resistance to paper, it has been considered to form a barrier coat layer on the surface of the paper by treating the surface of the paper with a barrier coating agent.

As such a barrier coating agent, for example, a composition used for overcoating a paper material and for an adhesive agent, which contains a resin containing a styrene-acrylic copolymer of styrene, α-methylstyrene, and (meth)acrylate has been proposed (for example, see Patent Document 1).

### Citation List

### Patent Document

Patent Document 1: PCT International Publication No. WO2020/203346

### SUMMARY OF THE INVENTION

### PROBLEM TO BE SOLVED BY THE INVENTION

Meanwhile, paper is required to have more excellent oil resistance. In addition, the paper including a barrier coat layer is required to have blocking resistance.

An objective of the present invention is to provide an aqueous barrier coating agent having excellent oil resistance and blocking resistance, and coated paper including a barrier coat layer obtained by using the aqueous barrier coating agent.

### MEANS FOR SOLVING THE PROBLEM

The present invention [1] includes an aqueous barrier coating agent including a polymer of a polymerization component containing (meth)acrylamide, (meth)acrylate having a straight-chain or branched alkyl group having 4 or more carbon atoms, styrenes and/or (meth)acrylate having a cyclic alkyl group, and a carboxyl group-containing vinyl monomer, wherein a mass ratio of the (meth)acrylate having a straight-chain or branched alkyl group having 4 or more carbon atoms with respect to the (meth)acrylamide is 8.3 or more and 27.0 or less.

The present invention [2] includes the aqueous barrier coating agent described in the above-described [1], wherein a content ratio of the carboxy group-containing vinyl monomer with respect to 100 parts by mass of the polymerization component is 0.1 parts by mass or more and 20.0 parts by mass or less.

The present invention [3] includes the aqueous barrier coating agent described in the above-described [1] or [2], further including a reaction product of a monocarboxylic acid having 16 or more and 28 or less carbon atoms and a monoalcohol having 24 or more and 34 or less carbon atoms.

The present invention [4] includes the aqueous barrier coating agent described in any one of the above-described [1] to [3], further including cellulose nanofibers.

The present invention [5] includes coated paper including: paper; and a barrier coat layer disposed on one side in a thickness direction of the paper and/or the other side in the thickness direction, wherein the barrier coat layer includes a dried product of the aqueous barrier coating agent described in any one of the above-described [1] to [4].

### EFFECTS OF THE INVENTION

In the aqueous barrier coating agent of the present invention, the mass ratio of the (meth)acrylate having a straight-chain or branched alkyl group having 4 or more carbon atoms with respect to the (meth)acrylamide is 8.3 or more and 27.0 or less. Therefore, it is possible to form a barrier coat layer having excellent oil resistance and blocking resistance.

The coated paper of the present invention includes a barrier coat layer containing a dried product of the aqueous barrier coating agent of the present invention. Therefore, the coated paper has excellent oil resistance and blocking resistance.

### BRIEF DESCRIPTION OF THE DRAWINGS

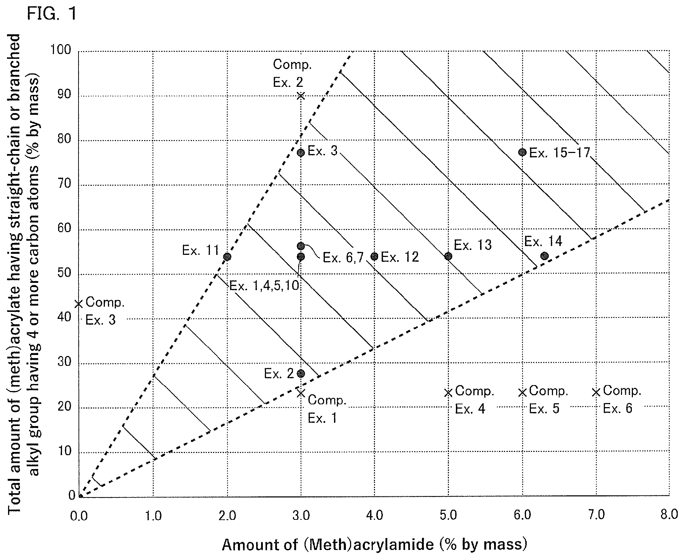

FIG. 1 is a graph showing the relationship of the (meth)acrylate having a straight-chain or branched alkyl group having 4 or more carbon atoms with respect to the (meth)acrylamide in each of Examples and Comparative Examples.

### DESCRIPTION OF THE EMBODIMENTS

In the following description, (meth)acrylic is acrylic and/or methacrylic.

### 1. Aqueous Barrier Coating Agent

An aqueous barrier coating agent contains a polymer of a polymerization component containing a predetermined monomer.

The polymerization component contains, as essential components, (meth)acrylamide, (meth)acrylate having a straight-chain or branched alkyl group having 4 or more carbon atoms, styrenes and/or (meth)acrylate having a cyclic alkyl group, and a carboxy group-containing vinyl monomer. The (meth)acrylamide, the (meth)acrylate having a straight-chain or branched alkyl group having 4 or more carbon atoms, the styrenes and/or (meth)acrylate having a cyclic alkyl group, and the carboxy group-containing vinyl monomer can be copolymerized with each other.

### <(Meth)acrylamide>

The (meth)acrylamide is a component that imparts oil resistance to the aqueous barrier coating agent.

The (meth)acrylamide is methacrylamide and/or acrylamide.

The (meth)acrylamide is preferably acrylamide.

The mass ratio of the (meth)acrylate having a straight-chain or branched alkyl group having 4 or more carbon atoms with respect to the (meth)acrylamide is 8.3 to 27.0, preferably 8.5 to 25.0, more preferably 8.5 to 23.0, even more preferably 8.5 to 20.0, particularly preferably 8.5 to 19.0, most preferably 8.5 to 15.0, and even more preferably 8.5 to 13.6.

Specifically, the mass ratio of the (meth)acrylate having a straight-chain or branched alkyl group having 4 or more carbon atoms with respect to the (meth)acrylamide is 8.3 or more, preferably 8.5 or more, and 27.0 or less, preferably 25.0 or less, more preferably 23.0 or less, even more preferably 20.0 or less, particularly preferably 19.0 or less, most preferably 15.0 or less, and even more preferably 13.6 or less.

When the mass ratio is the above-described lower limit or more, the oil resistance can be improved.

On the other hand, when the above-described mass ratio is less than the above-described lower limit, the oil resistance decreases.

When the above-described mass ratio is the above-described upper limit or less, the blocking resistance is improved.

On the other hand, when the above-described mass ratio exceeds the above-described upper limit, the blocking resistance decreases.

The content ratio of the (meth)acrylamide with respect to 100 parts by mass of the styrenes and/or (meth)acrylate having a cyclic alkyl group is, for example, 4 parts by mass to 150 parts by mass, preferably 5 parts by mass to 70 parts by mass, more preferably 10 parts by mass to 50 parts by mass, still more preferably 12 parts by mass to 45 parts by mass, particularly preferably 13 parts by mass to 43 parts by mass, most preferably 14 parts by mass to 40 parts by mass, still more preferably 20 parts by mass to 38 parts by mass, still more preferably 20 parts by mass to 36 parts by mass.

The content ratio of the (meth)acrylamide with respect to 100 parts by mass of the carboxy group-containing vinyl monomer is, for example, 20 parts by mass to 700 parts by mass, preferably 30 parts by mass to 200 parts by mass, more preferably 40 parts by mass to 180 parts by mass, still more preferably 50 parts by mass to 170 parts by mass, particularly preferably 70 parts by mass to 150 parts by mass, and most preferably 75 parts by mass to 130 parts by mass.

The content ratio of the (meth)acrylamide with respect to 100 parts by mass of the total amount of the (meth)acrylamide, the (meth)acrylate having a straight-chain or branched alkyl group having 4 or more carbon atoms, the styrenes and/or (meth)acrylate having a cyclic alkyl group, and the carboxy group-containing vinyl monomer (hereinafter, may be referred to as the total amount of the essential components) is, for example, 1.0 part by mass to 20 parts by mass, preferably 2.0 parts by mass to 10 parts by mass, more preferably 3.0 parts by mass to 9.5 parts by mass, still more preferably 3.5 parts by mass to 9.0 parts by mass, particularly preferably 4.5 parts by mass to 8.0 parts by mass.

The content ratio of the (meth)acrylamide with respect to 100 parts by mass of the polymerization component is, for example, 0.5 parts by mass to 20.0 parts by mass, preferably 1.0 parts by mass to 10.0 parts by mass, more preferably 2.0 parts by mass to 9.0 parts by mass, still more preferably 3.0 parts by mass to 8.0 parts by mass, particularly preferably 3.5 parts by mass to 7.0 parts by mass, and most preferably 3.5 parts by mass to 6.5 parts by mass.

### <(Meth)acrylate Having Straight-chain Or Branched Alkyl Group Having 4 Or More Carbon Atoms>

The (meth)acrylate having a straight-chain or branched alkyl group having 4 or more carbon atoms is a component that imparts oil resistance to the aqueous barrier coating agent.

The (meth)acrylate having a straight-chain or branched alkyl group having 4 or more carbon atoms does not contain a cyclic branched alkyl group and is distinguished from a (meth)acrylate having a cyclic alkyl group described later.

Examples of the (meth)acrylate having a straight-chain or branched alkyl group having 4 or more carbon atoms include n-butyl (meth)acrylate, 2-ethylhexyl (meth)acrylate, n-amyl (meth)acrylate, isoamyl (meth)acrylate, n-hexyl (meth)acrylate, octyl (meth)acrylate, decyl (meth)acrylate, dodecyl (meth)acrylate, octadecyl (meth)acrylate, and stearyl (meth)acrylate.

The (meth)acrylate having a straight-chain or branched alkyl group having 4 or more carbon atoms is appropriately selected from the viewpoint of adjusting the glass transition temperature of the polymer to achieve both oil resistance and blocking resistance.

The (meth)acrylate having a straight-chain or branched alkyl group having 4 or more carbon atoms is preferably n-butyl (meth)acrylate, 2-ethylhexyl (meth)acrylate, and more preferably n-butyl acrylate, 2-ethylhexyl acrylate. In other words, preferably, the (meth)acrylate having a straight-chain or branched alkyl group having 4 or more carbon atoms consists of n-butyl (meth)acrylate, or consists of 2-ethylhexyl (meth)acrylate, or consists of n-butyl (meth)acrylate and 2-ethylhexyl (meth)acrylate.

When the (meth)acrylate having a straight-chain or branched alkyl group having 4 or more carbon atoms consists of n-butyl (meth)acrylate and 2-ethylhexyl (meth)acrylate, the mass ratio of 2-ethylhexyl (meth)acrylate with respect to n-butyl (meth)acrylate is, for example, 0.5 or more, preferably 0.8 or more, more preferably 0.9 or more, and, for example, 2.0 or less, preferably 1.5 or less, more preferably 1.3 or less, and even more preferably 1.2 or less.

Specifically, the mass ratio of 2-ethylhexyl (meth)acrylate with respect to n-butyl (meth)acrylate is, for example, 0.5 to 2.0, preferably 0.8 to 1.5, more preferably 0.9 to 1.3, and still more preferably 0.9 to 1.2.

In the (meth)acrylate having a straight-chain or branched alkyl group having 4 or more carbon atoms, the number of carbon atoms is preferably 18 or less, more preferably 14 or less, still more preferably 10 or less, and particularly preferably 8 or less.

The content ratio of the (meth)acrylate having a straight-chain or branched alkyl group having 4 or more carbon atoms with respect to 100 parts by mass of the styrenes and/or (meth)acrylate having a cyclic alkyl group is, for example, 60 parts by mass to 1600 parts by mass, preferably 80 parts by mass to 1000 parts by mass, more preferably 150 parts by mass to 500 parts by mass, still more preferably 200 parts by mass to 350 parts by mass, particularly preferably 250 parts by mass to 320 parts by mass, and most preferably 260 parts by mass to 300 parts by mass.

The content ratio of the (meth)acrylate having a straight-chain or branched alkyl group having 4 or more carbon atoms with respect to 100 parts by mass of the carboxy group-containing vinyl monomer is, for example, 200 parts by mass to 12000 parts by mass, preferably 400 parts by mass to 10000 parts by mass, more preferably 800 parts by mass to 1600 parts by mass, and still more preferably 1000 to 1200 parts by mass.

The content ratio of the (meth)acrylate having a straight-chain or branched alkyl group having 4 or more carbon atoms with respect to 100 parts by mass of the essential components is, for example, 30 parts by mass to 90 parts by mass, preferably 40 parts by mass to 80 parts by mass, more preferably 50 parts by mass to 70 parts by mass, and still more preferably 60 parts by mass to 70 parts by mass.

Specifically, the content ratio of the (meth)acrylate having a straight-chain or branched alkyl group having 4 or more carbon atoms with respect to 100 parts by mass of the essential components is, from the viewpoint of oil resistance, for example, 30 parts by mass or more, preferably 40 parts by mass or more, more preferably 50 parts by mass or more, and even more preferably 60 parts by mass, and from the viewpoint of blocking resistance, for example, 90 parts by mass or less, preferably 80 parts by mass or less, and more preferably 70 parts by mass or less.

The content ratio of the (meth)acrylate having a straight-chain or branched alkyl group having 4 or more carbon atoms with respect to 100 parts by mass of the polymerization component is, for example, 20.0 parts by mass to 80.0 parts by mass, preferably 30.0 parts by mass to 70.0 parts by mass, and more preferably 40.0 parts by mass to 60.0 parts by mass.

Specifically, the content ratio of the (meth)acrylate having a straight-chain or branched alkyl group having 4 or more carbon atoms with respect to 100 parts by mass of the polymerization component is, from the viewpoint of oil resistance, for example, 20.0 parts by mass or more, preferably 30.0 parts by mass or more, and more preferably 40.0 parts by mass or more, and from the viewpoint of blocking resistance, for example, 80.0 parts by mass or less, preferably 70.0 parts by mass or less, and more preferably 60.0 parts by mass or less.

### <Styrenes and/or (Meth)acrylate Having Cyclic Alkyl Group>

Examples of the styrenes include styrene, α-methylstyrene, and vinyltoluene. The styrenes are preferably styrene, α-methylstyrene, more preferably styrene.

Examples of the (meth)acrylate having a cyclic alkyl group include cyclohexyl (meth)acrylate, isobornyl (meth)acrylate, and dicyclopentanyl (meth)acrylate. The (meth)acrylate having a cyclic alkyl group is preferably cyclohexyl (meth)acrylate, more preferably cyclohexyl acrylate.

The styrenes and/or (meth)acrylate having a cyclic alkyl group is preferably styrene, cyclohexylacrylate, more preferably styrene.

The styrenes and/or (meth)acrylate having a cyclic alkyl group can be used alone or in combination of two or more kinds thereof.

The content ratio of the styrenes and/or (meth)acrylate having a cyclic alkyl group with respect to 100 parts by mass of the carboxy group-containing vinyl monomer is, for example, 80 parts by mass to 5000 parts by mass, preferably 100 parts by mass to 1000 parts by mass, more preferably 200 parts by mass to 500 parts by mass, and still more preferably 300 parts by mass to 400 parts by mass.

The content ratio of the styrenes and/or (meth)acrylate having a cyclic alkyl group with respect to 100 parts by mass of the essential components is, for example, 1 part by mass to 50 parts by mass, preferably 10 parts by mass to 40 parts by mass, and more preferably 20 parts by mass to 30 parts by mass.

The content ratio of the styrenes and/or (meth)acrylate having a cyclic alkyl group with respect to 100 parts by mass of the polymerization component is, for example, 4.0 parts by mass to 40.0 parts by mass, preferably 10.0 parts by mass to 30.0 parts by mass, and more preferably 15.0 parts by mass to 20.0 parts by mass.

### <Carboxy Group-containing Vinyl Monomer>

The carboxy group-containing vinyl monomer is a component for improving oil resistance.

Examples of the carboxy group-containing vinyl monomer include a monocarboxylic acid, a dicarboxylic acid, and salts thereof. Examples of the monocarboxylic acid include (meth)acrylic acid. Examples of the dicarboxylic acid include itaconic acid, maleic acid, fumaric acid, itaconic anhydride, maleic anhydride, and fumaric anhydride.

The carboxy group-containing vinyl monomer is preferably a monocarboxylic acid, more preferably (meth)acrylic acid, still more preferably methacrylic acid.

The carboxy group-containing vinyl monomers may be used alone or in combination of two or more kinds thereof.

The content ratio of the carboxy group-containing vinyl monomer with respect to 100 parts by mass of the essential components is, for example, 0.1 parts by mass to 20 parts by mass, preferably 1 part by mass to 15 parts by mass, and more preferably 3 parts by mass to 10 parts by mass.

The content ratio of the carboxy group-containing vinyl monomer with respect to 100 parts by mass of the polymerization component is, for example, 0.1 parts by mass to 20.0 parts by mass, preferably 1.0 part by mass to 15.0 parts by mass, more preferably 3.0 parts by mass to 10.0 parts by mass, and still more preferably 4.0 parts by mass to 7.0 parts by mass.

Specifically, the content ratio of the carboxy group-containing vinyl monomer with respect to 100 parts by mass of the polymerization component is, from the viewpoint of oil resistance, for example, 0.1 parts by mass or more, preferably 1.0 part by mass or more, more preferably 3.0 parts by mass or more, and even more preferably 4.0 parts by mass or more, and from the viewpoint of oil resistance, for example, 20.0 parts by mass or less, preferably 15.0 parts by mass or less, more preferably 10.0 parts by mass or less, and even more preferably 7.0 parts by mass or less.

### <Copolymerizable Monomer>

The polymerization component can also contain a copolymerizable monomer (excluding the crosslinkable monomer described later) that is copolymerizable with the (meth)acrylamide, the (meth)acrylate having a straight-chain or branched alkyl group having 4 or more carbon atoms, the styrenes and/or (meth)acrylate having a cyclic alkyl group, and the carboxy group-containing vinyl monomer.

Examples of the copolymerizable monomer include a (meth)acrylate having an alkyl group having 3 or less carbon atoms.

Examples of the (meth)acrylate having an alkyl group having 3 or less carbon atoms include methyl (meth)acrylate, ethyl (meth)acrylate, and isopropyl (meth)acrylate.

The copolymerizable monomer is preferably methyl (meth)acrylate, more preferably methyl methacrylate.

The copolymerizable monomers may be used alone or in combination of two or more kinds thereof.

The content ratio of the copolymerizable monomer with respect to 100 parts by mass of the essential components is, for example, 1 part by mass to 70 parts by mass, preferably 3 parts by mass to 60 parts by mass, more preferably 5 parts by mass to 50 parts by mass, more preferably 7 parts by mass to 40 parts by mass, still more preferably 8 parts by mass to 30 parts by mass, and particularly preferably 10 parts by mass to 25 parts by mass.

The content ratio of the copolymerizable monomer with respect to 100 parts by mass of the polymerization component is, for example, 1.0 part by mass to 50.0 parts by mass, preferably 5.0 parts by mass to 40.0 parts by mass, more preferably 7.0 parts by mass to 30.0 parts by mass, and still more preferably 10.0 parts by mass to 20.0 parts by mass.

The copolymerizable monomer preferably does not contain a silicon-containing monomer (for example, a polysiloxane-containing (meth)acrylate). Specifically, this polymer can achieve sufficient oil resistance without containing a silicon-containing monomer having excellent oil resistance.

In addition, the copolymerizable monomer preferably does not contain a fluorinecontaining monomer (for example, a perfluoroalkyl group-containing (meth)acrylate). Specifically, this polymer can achieve sufficient oil resistance without containing a fluorinecontaining monomer having excellent oil resistance.

### <Crosslinkable Monomer>

The polymerization component contains a crosslinkable monomer, as necessary, from the viewpoint of improving oil resistance.

The crosslinkable monomer is copolymerizable with the (meth)acrylamide, the (meth)acrylate having a straight-chain or branched alkyl group having 4 or more carbon atoms, the styrenes and/or (meth)acrylate having a cyclic alkyl group, the carboxy group-containing vinyl monomer, and the copolymerizable monomer, and forms a cross-linked structure.

Examples of the crosslinkable monomer include a monofunctional crosslinking agent, a bifunctional crosslinking agent, and a polyfunctional crosslinking agent.

Examples of the monofunctional crosslinking agent include N-(hydroxymethyl)acrylamide, N-(hydroxyethyl)acrylamide, N,N'-dimethylacrylamide, diacetoneacrylamide, N-(isopropyl)acrylamide, and polyethylene glycol mono(meth)acrylate. The monofunctional crosslinking agent is preferably N-(hydroxymethyl)acrylamide.

Examples of the bifunctional crosslinking agent include methylene bis(meth)acrylamide, ethylene bis(meth)acrylamide, allyl(meth)acrylamide, divinylbenzene, allyl(meth)acrylate, and polyethylene glycol di(meth)acrylate. The bifunctional crosslinking agent is preferably polyethylene glycol di(meth)acrylate. Examples of the polyethylene glycol di(meth)acrylate include ethylene glycol di(meth)acrylate, diethylene glycol di(meth)acrylate, and triethylene glycol di(meth)acrylate.

Examples of the polyfunctional crosslinking agent include triacrylformal, triallylisocyanurate, pentaerythritol triacrylate, trimethylolpropane (meth)acrylate, and tetraallyloxyethane.

The crosslinkable monomer is preferably a monofunctional crosslinking agent, more preferably N-(hydroxymethyl)acrylamide.

The blending ratio of the crosslinkable monomer with respect to 100 parts by mass of the polymerization component is, for example, 0.01 parts by mass to 10.0 parts by mass, preferably 0.1 parts by mass to 5.0 parts by mass, more preferably 0.5 parts by mass to 3.0 parts by mass, and still more preferably 0.8 parts by mass to 1.5 parts by mass.

Specifically, the blending ratio of the crosslinkable monomer with respect to 100 parts by mass of the polymerization component is, for example, 10 parts by mass or less, preferably 5.0 parts by mass or less, more preferably 3.0 parts by mass or less, and still more preferably 1.5 parts by mass or less from the viewpoint of oil resistance.

### <Method of Producing Polymer>

The polymer is produced by polymerizing the polymerization component. The method of polymerizing the polymerization component is not particularly limited, but is preferably emulsion polymerization.

In the emulsion polymerization, first, the polymerization component, water, and an emulsifier (for example, alkylbenzene sulfonate) are charged into a predetermined reaction vessel, and if necessary, for example, a catalyst, a chain transfer agent are appropriately blended, thereby preparing a mixture (monomer mixture) containing the polymerization component.

For example, a known anionic surfactant, a nonionic surfactant can be used as the above-described emulsifier.

Examples of the above-described anionic surfactant include alkylbenzene sulfonates such as sodium dodecylbenzenesulfonate, fatty acid salts, rosin acid salts, alkyl sulfate esters, alkyl sulfosuccinates, α-olefin sulfonates, alkylnaphthalene sulfonates, and polyoxyethylene alkyl(aryl) sulfate ester salts. The anionic surfactant is preferably alkylbenzene sulfonate.

Examples of the above-described nonionic surfactant include ethylene oxide adducts and/or propylene oxide adducts, for example, of C1-C20 alkanol, phenol, naphthol, bisphenols, C1-C20 alkylnaphthol, polyoxyethylene (propylene) glycol, and aliphatic amine.

The emulsifier is preferably an anionic surfactant, more preferably an alkylbenzene sulfonate.

The emulsifiers may be used alone or in combination of two or more kinds thereof.

Next, a polymerization initiator and the monomer mixture are added to a mixture containing water and the emulsifier to polymerize the polymerization component.

The polymerization initiator is prepared in advance as an aqueous solution of the polymerization initiator, and is blended into the mixture containing the water and emulsifier in a batch or batches.

Examples of the polymerization initiator include radical polymerization initiators, specifically, examples thereof include peroxide-based compounds, sulfides, sulfines, sulfinic acids, and more preferably a peroxide-based compound is used. The peroxide-based compound may be used in combination with a reducing agent as a redox polymerization initiator. Examples of the peroxide-based compound include an organic peroxide and an inorganic peroxide. The peroxide-based compound is preferably an inorganic peroxide.

Examples of the organic peroxide include benzoyl peroxide, lauroyl peroxide, and acetyl peroxide.

Examples of the inorganic peroxide include persulfates such as sodium persulfate, potassium persulfate, and ammonium persulfate; bromates such as hydrogen peroxide, potassium permanganate, sodium bromate, and potassium bromate; perborates such as sodium perborate, potassium perborate, and ammonium perborate; percarbonates such as sodium percarbonate, potassium percarbonate, and ammonium percarbonate; perphosphates such as sodium perphosphate, potassium perphosphate, and ammonium perphosphate. The inorganic peroxide is preferably a persulfate, more preferably potassium persulfate, ammonium persulfate, and still more preferably ammonium persulfate.

As the polymerization initiator, an azo compound can also be used. Examples of the azo compound include 2,2'-azobisisobutyronitrile, 2,2'-azobis(2-methylbutyronitrile), 2,2'-azobis(2-methylpropionamidine), and salts thereof.

The polymerization initiator is preferably an inorganic peroxide, more preferably a persulfate, and even more preferably ammonium persulfate.

The polymerization initiators may be used alone or in combination of two or more kinds thereof.

As polymerization conditions, the polymerization temperature is, for example, 60°C to 100°C, preferably 70°C to 90°C. The polymerization time is, for example, 1 hour to 12 hours, preferably 4 hours to 8 hours.

The polymer is preferably adjusted to have a pH of 5 to 9 by neutralizing the carboxy group derived from the carboxy group-containing vinyl monomer with a neutralizing agent.

Examples of the neutralizing agent include a known basic compound. Examples of the basic compound include an amine compound, hydroxide, and morpholine. The basic compound is preferably an amine compound.

Examples of the amine compound include monoamines such as ammonia, triethylamine, and diethylamine; alkanolamines such as 2-amino-2-methyl-1-propanol, N,N-dimethylaminoethanol, N,N-diethylaminoethanol, 2-dimethylamino-2-methyl-1-propanol, monoisopropanolamine, diisopropanolamine, triisopropanolamine, monoethanolamine, diethanolamine, triethanolamine, N-ethyldiethanolamine, and N-methyldiethanolamine. The amine compound is preferably a monoamine, more preferably ammonia.

Examples of the hydroxide include sodium hydroxide and potassium hydroxide.

The neutralizing agent is preferably a basic compound, more preferably an amine compound, and still more preferably ammonia.

The neutralizing agents may be used alone or in combination of two or more kinds thereof.

The polymer has a glass transition temperature of, for example, -70°C to 40°C, preferably -55°C to 25°C, more preferably -40°C to 10°C, still more preferably -30°C to 5°C, particularly preferably -25°C to 3°C, and most preferably -20°C to -5°C.

The glass transition temperature is calculated by the FOX equation.

The polymer has a weight average molecular weight (Mw) of, for example, 20000 to 250000, preferably 30000 to 200000, in terms of standard polystyrene measured by gel permeation chromatography (GPC).

### <Reaction Product of Monocarboxylic Acid Having 16 Or More and 28 Or Less Carbon Atoms and Monoalcohol Having 24 Or More and 34 Or Less Carbon Atoms>

The aqueous barrier coating agent preferably includes a reaction product of a monocarboxylic acid having 16 or more and 28 or less carbon atoms and a monoalcohol having 24 or more and 34 or less carbon atoms from the viewpoint of improving oil resistance and blocking resistance.

Examples of the monocarboxylic acid having 16 or more and 28 or less carbon atoms include palmitic acid (carbon number 16), malgaric acid (carbon number 17), stearic acid (carbon number 18), nonadecyl acid (carbon number 19), arachidic acid (carbon number 20), henicosyl acid (carbon number 21), behenic acid (carbon number 22), tricosyl acid (carbon number 23), lignoselic acid (carbon number 24), pentacosyl acid (carbon number 25), serotinic acid (carbon number 26), heptacosyl acid (carbon number 27), and montanic acid (carbon number 28).

The monocarboxylic acid having 16 or more and 28 or less carbon atoms is preferably a monocarboxylic acid having 16 or more and 20 or less carbon atoms, more preferably a monocarboxylic acid having 16 or more and 18 or less carbon atoms, and still more preferably palmitic acid.

The monocarboxylic acids having 16 or more and 28 or less carbon atoms may be used alone or in combination of two or more kinds thereof.

Examples of the monoalcohol having 24 or more and 34 or less carbon atoms include 1-tetracosanol (carbon number 24), 1-pentacosanol (carbon number 25), 1-hexacosanol (carbon number 26), 1-heptacosanol (carbon number 27), 1-octacosanol (carbon number 28), 1-nonacosanol (carbon number 29), 1-triacontanol (carbon number 30), 1-hentriacontanol (carbon number 31), and 1-dotriacontanol (carbon number 32), 1-tritriacontanol (carbon number 33), and 1-tetratriacontanol (carbon number 34).

The monoalcohol having 24 or more and 34 or less carbon atoms is preferably a monoalcohol having 26 or more and 32 or less carbon atoms, more preferably a monoalcohol having 28 or more and 30 or less carbon atoms, and still more preferably 1-triacontanol.

The monoalcohols having 24 or more and 34 or less carbon atoms may be used alone or in combination of two or more kinds thereof.

To react (esterify) the monocarboxylic acid having 16 or more and 28 or less carbon atoms with the monoalcohol having 24 or more and 34 or less carbon atoms, for example, in a nitrogen atmosphere, the monocarboxylic acid having 16 or more and 28 or less carbon atoms and the monoalcohol having 24 or more and 34 or less carbon atoms are mixed, dissolved at 80°C or more and 110°C or less, and then the temperature is increased to react them.

As the reaction conditions, the reaction temperature is, for example, 120°C to 220°C, or preferably 150°C to 200°C. The reaction is continued until the acid value (JIS K 5601-2-1 (1999)) reaches, for example, 20 mgKOH/g or less, and the reaction time is, for example, 0.5 hours to 6 hours.

In this manner, a reaction product of the monocarboxylic acid having 16 or more and 28 or less carbon atoms and the monoalcohol having 24 or more and 34 or less carbon atoms is produced.

The content ratio of the reaction product of the monocarboxylic acid having 16 or more and 28 or less carbon atoms and the monoalcohol having 24 or more and 34 or less carbon atoms with respect to 100 parts by mass of the polymer is, for example, 5.0 parts by mass to 30.0 parts by mass, preferably 10.0 parts by mass to 20.0 parts by mass, and more preferably 10.0 parts by mass to 15.0 parts by mass.

Specifically, the content ratio of the reaction product of the monocarboxylic acid having 16 or more and 28 or less carbon atoms and the monoalcohol having 24 or more and 34 or less carbon atoms with respect to 100 parts by mass of the polymer is, from the viewpoint of improving oil resistance and blocking resistance, for example, 5.0 parts by mass or more, preferably 10.0 parts by mass or more, and from the viewpoint of oil resistance, for example, 30.0 parts by mass or less, preferably 20.0 parts by mass or less, more preferably 15.0 parts by mass or less.

### <Cellulose Nanofibers>

The aqueous barrier coating agent preferably contains cellulose nanofibers from the viewpoint of improving oil resistance and blocking resistance.

The cellulose nanofibers are preferably prepared as an aqueous dispersion of cellulose nanofibers obtained by dispersing cellulose nanofibers in water. As the aqueous dispersion of cellulose nanofibers, a commercially available product may be used. Examples of the commercially available product include RHEOCRYSTA I-2SX.

The content ratio of the cellulose nanofibers with respect to 100 parts by mass of the polymer is, for example, 0.1 parts by mass to 5 parts by mass, preferably 0.2 parts by mass to 1 part by mass.

Specifically, the content ratio of the cellulose nanofibers with respect to 100 parts by mass of the polymer is, from the viewpoint of improving oil resistance and blocking resistance, for example, 0.1 parts by mass or more, preferably 0.2 parts by mass or more, and from the viewpoint of oil resistance, for example, 5.0 parts by mass or less, preferably 1.0 part by mass or less.

### <Additive>

The aqueous barrier coating agent contains an additive, as necessary.

Examples of the additive include an antifoaming agent, a preservative, a chelating agent, an anti-slip agent, an antirust agent, an ultraviolet ray inhibitor, an anti-discoloration agent, a fluorescent brightener, a viscosity stabilizer, and a surface paper strength enhancer.

The aqueous barrier coating agent preferably does not include a polysiloxane compound (for example, polyether-modified polydimethylsiloxane). Specifically, this aqueous barrier coating agent can achieve sufficient oil resistance without containing a polysiloxane compound having excellent oil resistance.

The aqueous barrier coating agent preferably does not contain a fluorine compound. Specifically, while having excellent oil resistance, a fluorine compound may increase environmental burdens. On the other hand, this aqueous barrier coating agent can achieve sufficient oil resistance without containing a fluorine compound having excellent oil resistance.

### <Preparation of Aqueous Barrier Coating Agent>

The aqueous barrier coating agent is prepared by mixing the polymer, the reaction product of the monocarboxylic acid having 16 or more and 28 or less carbon atoms and the monoalcohol having 24 or more and 34 or less carbon atoms, which is blended as necessary, the cellulose nanofibers (aqueous dispersion of cellulose nanofibers), which is blended as necessary, an additive, which is blended as necessary, and water.

When the reaction product of the monocarboxylic acid having 16 or more and 28 or less carbon atoms and the monoalcohol having 24 or more and 34 or less carbon atoms is blended, preferably, the reaction product of the monocarboxylic acid having 16 or more and 28 or less carbon atoms and the monoalcohol having 24 or more and 34 or less carbon atoms is heated in advance at 20°C or more and 60°C or less.

The solid content concentration of the aqueous barrier coating agent is, for example, 10% by mass to 50% by mass, preferably 20% by mass to 45% by mass, and more preferably 30% by mass to 40% by mass.

In the aqueous barrier coating agent, the mass ratio of the (meth)acrylate having a straight-chain or branched alkyl group having 4 or more carbon atoms with respect to the (meth)acrylamide is 8.3 or more and 27.0 or less. Therefore, a barrier coat layer having excellent oil resistance and blocking resistance can be formed.

Such an aqueous barrier coating agent is preferably used, in particular, in a use for imparting oil resistance to paper.

Hereinafter, the coated paper obtained by using the aqueous barrier coating agent is detailed.

### 2. Coated Paper

The coated paper includes paper and a barrier coat layer disposed on one side in a thickness direction of the paper and/or the other side in the thickness direction.

Specifically, the coated paper includes paper and a barrier coat layer in order toward one side in the thickness direction (or the other side in the thickness direction), or includes a barrier coat layer, paper, and a barrier coat layer in order toward one side in the thickness direction.

Examples of the paper include newsprint paper, ink-jet printing paper, thermal recording base paper, wood-free paper, paperboard, coated paper, and kraft paper.

The basis weight of the paper is, for example, 50g/m² to 120g/m², preferably 70g/m² to 100g/m².

The barrier coat layer includes a dried product of the aqueous barrier coating agent. The barrier coat layer preferably consists of a dried product of the aqueous barrier coating agent.

The coated paper is obtained by applying the aqueous barrier coating agent to a one-side surface of the paper in the thickness direction and/or the other-side surface in the thickness direction, and then drying the coated paper.

Specifically, the application is carried out so that the mass of the aqueous barrier coating agent after drying falls within, for example, 1 g/m² to 20 g/m², preferably 5 g/m² to 15 g/m².

The application method is not particularly limited, and examples thereof include a gravure coating method, a reverse coating method, a roll coating method, a bar coating method, a spray coating method, an air knife coating method, and a dipping method. The application method is preferably a bar coating method.

As the drying conditions, the drying temperature is, for example, 70°C to 180°C, preferably 90°C to 150°C, and more preferably 110°C to 150°C. The drying time is, for example, 0.5 minutes to 10 minutes.

As a result, a barrier coat which is a dried product of the aqueous barrier coating agent is formed on the one-side surface of the paper in the thickness direction and/or the other-side surface of the paper in the thickness direction. As described above, a coated paper including paper and a barrier coat layer disposed on the one-side surface of the paper in the thickness direction and/or the other-side surface in the thickness direction is produced.

### <Operations and Effects>

In the aqueous barrier coating agent, the mass ratio of the (meth)acrylate having a straight-chain or branched alkyl group having 4 or more carbon atoms with respect to the (meth)acrylamide is 8.3 or more and 27.0 or less. Therefore, a barrier coat layer having excellent oil resistance and blocking resistance can be formed.

The coated paper includes a barrier coat layer containing a dried product of the aqueous barrier coating agent, and thus has excellent oil resistance and blocking resistance.

### Examples

The specific numeral values used in the description below, such as mixing ratios (contents), physical property values, and parameters can be replaced with the corresponding mixing ratios (contents), physical property values, parameters in the above-described "DESCRIPTION OF THE EMBODIMENTS", including the upper limit values (numeral values defined with "or less", and "less than") or the lower limit values (numeral values defined with "or more", and "more than"). The "parts" and "%" are based on mass unless otherwise specified.

### <Details of Components>

The trade names and abbreviations of the components used in each of Examples and Comparative Examples are detailed.

The numerical values in parentheses indicate the glass transition temperatures of the homopolymers.
AM: acrylamide (153°C)
2EHA: 2-ethylhexyl acrylate (-85°C)
nBA: n-butyl acrylate (-54°C)
St: styrene (100°C)
MAA: methacrylic acid (130°C)
MMA: methyl methacrylate (105°C)
RHEOCRYSTA I-2SX: aqueous dispersion of cellulose nanofibers (solid content: 2% by mass), manufactured by DKS Co. Ltd.

### <Production of Polymer>

### Production Examples 1 to 15 and Comparative Production Examples 1 to 6

Each polymerization component shown in Tables 1 and 2, 7.1 parts by mass of a 20 % by mass alkylbenzene sulfonate aqueous solution (trade name "NEOGEN S-20F" manufactured by DKS Co. Ltd.) as an emulsifier, and 41.2 parts by mass of water were blended and stirred, thereby producing a monomer mixture.

Separately, in a beaker, 1.2 parts by mass of ammonium persulfate as a polymerization initiator and 32.4 parts by mass of water were blended, stirred, and dissolved, thereby preparing a polymerization initiator aqueous solution.

In a four-necked flask equipped with a stirrer, a thermometer, and a reflux condenser, 112 parts by mass of water and 3.1 parts by mass of a 20 % by mass alkylbenzene sulfonate aqueous solution (Neogen S-20F) as an emulsifier were blended and heated to 80°C while being stirred.

Subsequently, the monomer mixture and the polymerization initiator aqueous solution were separately injected to the alkylbenzene sulfonate aqueous solution continuously over 4 hours, and the polymerization was progressed while the temperature during the injection was maintained at 80°C. After the injection, the reaction was continued at 80°C for 2.5 hours. Thereafter, the resulting polymer was cooled to 40°C.

Next, 0.2 parts by mass of a 28% by mass ammonia water and 2.9 parts by mass of water were blended so that the pH of the resulting polymer fell within 5 to 9, and the acid group (carboxy group) in the polymer was neutralized with ammonia, thereby obtaining an aqueous dispersion of the polymer having a solid content concentration of 35.0% by mass and a viscosity of 650 mPa·s (25°C).

### <Synthesis of Reaction Product of Monocarboxylic Acid Having 16 Or More and 28 Or Less Carbon Atoms and Monoalcohol Having 24 Or More and 34 Or Less Carbon Atoms>

### Synthesis Example 1

Into a four-necked flask equipped with a stirrer, a thermometer, a nitrogen injection pipe, a drain pipe, and a reflux condenser, 40 parts by mass of "palmitic acid (carbon number 16)" manufactured by FUJIFILM Wako Pure Chemical Corporation and 68.5 parts by mass of "1-triacontanol (carbon number 30)" manufactured by Tokyo Chemical Industry Co., Ltd. were charged, heated to 100°C, and stirred to dissolve the raw materials.

Next, the temperature was raised to 180°C while the stirring was continued, and the reaction was carried out for 1 hour while the temperature was maintained. During the reaction, nitrogen gas was blown therein, and the water accumulated in the drain pipe was appropriately discharged. After 1 hour, sampling was carried out. The acid value of the obtained sample was measured according to JIS K 5601-2-1 (1999). Specifically, 5 g of the sample was dissolved in a mixed solvent of toluene/methanol = 1/1, and titrated using a 0.1 mol% KOH aqueous solution. When the acid value of the obtained sample was 20 mgKOH/g or less, the reaction was deemed to reach the end point, and cooling was started. When the acid value was 20 mgKOH/g or more, sampling and acid value measurement were carried out every 30 minutes, and the reaction was continued until the acid value reached 20 mgKOH/g or less. After the reaction reached the end point, the sample was cooled. The resulting mixture was purified by silica gel column chromatography. Thus, a reaction product of a monocarboxylic acid having 16 or more and 28 or less carbon atoms and a monoalcohol having 24 or more and 34 or less carbon atoms was obtained (yield: 90.9%).

### <Preparation of Aqueous Barrier Coating Agent>

### Preparation Examples 1 to 7, Preparation Examples 10 to 17, and Comparative Preparation Examples 1 to 6

The polymers of Preparation Examples 1 to 15 and Comparative Preparation Examples 1 to 6 were used as aqueous barrier coating agents without any changes.

### Example 8

In a four-necked flask equipped with a thermometer, a stirrer, and a reflux condenser, a reaction product of a monocarboxylic acid having 16 or more and 28 or less carbon atoms and a monoalcohol having 24 or more and 34 or less carbon atoms was blended based on each description in Tables 3 and 4, and stirred at 60°C for 30 minutes. Subsequently, the polymer was blended, stirred for 30 minutes, and then cooled to 40°C or less. In this manner, an aqueous barrier coating agent was prepared. The numerical value of each component in Tables 3 and 4 is "parts by mass" of the solid content.

### Example 9

In a beaker, 25 parts by mass of RHEOCRYSTA I-2SX and 75 parts by mass of water were blended, and stirred with a high-speed stirrer LABOLUTION for 15 minutes to prepare an aqueous dispersion containing RHEOCRYSTA I-2SX.

Next, based on the descriptions in Tables 3 and 4, the polymer and the aqueous dispersion containing RHEOCRYSTA I-2SX were blended and stirred with the LABOLUTION for 15 minutes. In this manner, an aqueous barrier coating agent was prepared.

### <Evaluations>

### (Production of Coated Paper)

The solid content concentration of the aqueous barrier coating agent of each of Examples and Comparative Examples was adjusted to 35.0% by mass at 25°C.

Next, the aqueous barrier coating agent of each of Examples and Comparative Examples was applied to a one-side surface of kraft paper (basis weight: 83g/m², size: 25 cm long×25 cm wide) in the thickness direction using a bar coater so as to be 10g/m² in terms of mass after drying, and dried using a hot air dryer at 120°C for 1 minute. In this manner, a barrier coat layer was disposed on the one-side surface of the paper in the thickness direction, and a coated paper was produced.

### (Oil Resistance)

The oil resistance of the coated paper of each of Examples and Comparative Examples was evaluated in a constant temperature and humidity environment (23°C, relative humidity 50%) in accordance with the evaluation standard T-559 cm-02 (kit method) of TAPPI (The leading technical association for the worldwide pulp, paper, and converting industry).

The evaluation is on a 12-point scale of 1 to 12, and means that the larger the numerical value is the better the oil resistance is.

When any test solution, even the NO. 1 test solution, bled within 15 seconds, the coated paper was evaluated as "no oil resistance".

In the evaluation of Comparative Example 2, when the test solution was wiped with paper tissues, the tissues adhered to the coated paper due to the blocking, and this made it impossible to confirm the presence or absence of bleed. However, when the surface of the coated paper was visually observed before the wiping, a bleed of the test solution into the coated paper was not observed.

All of Examples 1, 3 and 6 to 17 scored 12 in the oil resistance evaluation, and it was unclear which one was better than the others. Thus, separately, a coated paper was produced by applying the aqueous barrier coating agent in an amount of 6 g/m² in terms of mass after drying, and the oil resistance of the coated paper was evaluated in the same manner.

### (Blocking Resistance)

The coated paper of each of Examples and Comparative Examples was cut into a size of 7 cm long and 7 cm wide to create a test piece. In addition, uncoated kraft paper (basis weight: 83g/m²) was cut into a size of 7 cm long and 7 cm wide.

In an atmosphere of 23°C and a relative humidity of 50%, the barrier coat layer of the test piece and the uncoated kraft paper were layered and pressed by a load of 2 kg applied thereon for 24 hours. Thereafter, the entire surfaces of the test piece and the uncoated kraft paper were peeled from each other in 1.5 seconds, and the blocking resistance was evaluated based on the following criteria.

The presence or absence of the sound of the following criteria was confirmed at a position 15 cm away from the ear of the experimenter. In addition, the evaluation was carried out by two experimenters. When even one of them heard the sound, the sound was deemed to be made. The results are shown in Tables 3 and 4.

### {Criteria}

A: No peeling of the barrier coat layer was observed, and no sound was heard at the time of peeling.
B: No peeling of the barrier coat layer was observed, but a sound was heard at the time of peeling.
C: The peeling of less than 50% of the barrier coat layer was observed.
D: The peeling of 50% or more of the barrier coat layer was observed.

### <Consideration>

FIG. 1 is a graph showing the relationship of the (meth)acrylate having a straight-chain or branched alkyl group having 4 or more carbon atoms with the (meth)acrylamide in each of Examples and Comparative Examples.

FIG. 1 demonstrates that when the mass ratio of the (meth)acrylate having a straight-chain or branched alkyl group having 4 or more carbon atoms with respect to the (meth)acrylamide falls within 8.3 or more and 27.0 or less (specifically, the shaded portion in FIG. 1), both the oil resistance and the blocking resistance can be improved.

### [Table 1]

**Table 1**

| Prod. Ex. · Comp. Prod. Ex. No. | | | Prod. Ex. 1 | Prod. Ex. 2 | Prod. Ex. 3 | Prod. Ex. 4 | Prod. Ex. 5 | Prod. Ex. 6 | Prod. Ex. 7 | Prod. Ex. 8 | Prod. Ex. 9 | Prod. Ex. 10 |
|---|---|---|---|---|---|---|---|---|---|---|---|---|
| | (Meth)acrylamide | AM | 3.0 | 3.0 | 3.0 | 3.0 | 3.0 | 3.0 | 3.0 | 3.0 | 2.0 | 4.0 |
| | (Meth)acrylate having straight-chain or branched alkyl group having 4 or more carbon atoms | 2EHA | 27.2 | 16.4 | 77.2 | 27.2 | 27.2 | 29.6 | 29.6 | 27.2 | 27.2 | 27.2 |
| | | nBA | 26.7 | 11.2 | 0.0 | 26.7 | 26.7 | 26.7 | 26.7 | 26.7 | 26.7 | 26.7 |
| | Styrenes | St | 18.8 | 31.0 | 5.0 | 18.8 | 18.8 | 18.8 | 18.8 | 38.1 | 18.8 | 18.8 |
| Polymer | Carboxyl group-containing monomer | MAA | 5.0 | 5.0 | 5.0 | 0.5 | 9.0 | 5.0 | 5.0 | 5.0 | 5.0 | 5.0 |
| | Copolymerizable monomer | MMA | 19.3 | 33.4 | 9.8 | 23.8 | 15.3 | 16.9 | 16.9 | 0 | 20.3 | 18.3 |
| | Crosslinkable monomer | N-(hydroxymethyl) acrylamide | 1.0 | 1.0 | 1.0 | 1.0 | 1.0 | 1.0 | 0.0 | 1.0 | 1.0 | 1.0 |
| | Mass ratio of (meth)acrylate having straight-chain or branched alkyl group having 4 or more carbon atoms to (meth)acrylamide | | 18.0 | 9.2 | 25.7 | 18.0 | 18.0 | 18.8 | 18.8 | 18.0 | 27.0 | 13.5 |
| | Glass transition temperature(°C) | | -15 | 31 | -61 | -15 | -15 | -19 | -19 | -15 | -15 | -15 |

**Table 2**

| Prod. Ex. · Comp. Prod. Ex. No. | | | Prod. Ex. 11 | Prod. Ex. 12 | Prod. Ex. 13 | Prod. Ex. 14 | Prod. Ex. 15 | Comp. Prod. Ex. 1 | Comp. Prod. Ex. 2 | Comp. Prod. Ex. 3 | Comp. Prod. Ex. 4 | Comp. Prod. Ex. 5 | Comp. Prod. Ex. 6 |
|---|---|---|---|---|---|---|---|---|---|---|---|---|---|
| | (Meth)acrylamide | AM | 5.0 | 6.3 | 6.0 | 6.0 | 6.0 | 3.0 | 3.0 | 0.0 | 5.0 | 6.0 | 7.0 |
| | (Meth)acrylate having straight-chain or branched alkyl group having 4 or more carbon atoms | 2EHA | 27.2 | 27.2 | 38.6 | 77.2 | 0.0 | 13.0 | 90.0 | 23.1 | 13.0 | 13.0 | 13.0 |
| | | nBA | 26.7 | 26.7 | 38.6 | 0.0 | 77.2 | 10.2 | 0.0 | 20.3 | 10.2 | 10.2 | 10.2 |
| | Styrenes | St | 18.8 | 18.8 | 5.0 | 5.0 | 5.0 | 35.4 | 1.0 | 25.3 | 31.4 | 31.4 | 31.4 |
| Polymer | Carboxyl group-containing monomer | MAA | 5.0 | 5.0 | 5.0 | 5.0 | 5.0 | 5.0 | 5.0 | 5.0 | 5.0 | 5.0 | 5.0 |
| | Copolymerizable monomer | MMA | 17.3 | 16.0 | 6.8 | 6.8 | 6.8 | 33.4 | 1.0 | 26.3 | 35.4 | 34.4 | 33.4 |
| | Crosslinkable monomer | N-(hydroxymethyl) acrylamide | 1.0 | 1.0 | 1.0 | 1.0 | 1.0 | 1.0 | 1.0 | 1.0 | 1.0 | 1.0 | 1.0 |
| | Mass ratio of (meth)acrylate having straight-chain or branched alkyl group having 4 or more carbon atoms to (meth)acrylamide | | 10.8 | 8.6 | 12.9 | 12.9 | 12.9 | 7.7 | 30.0 | - | 4.6 | 3.9 | 3.3 |
| | Glass transition temperature(°C) | | -15 | -14 | -45 | -60 | -29 | 41 | -74 | 1 | 42 | 42 | 42 |

**Table 3**

| Ex. · Comp. Ex. No. | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|---|
| Aqueous barrier coating agent | Polymer | Prod. Ex. 1 | 100 | - | - | - | - | - | - | 100 | 100 | - | - | - |
| | | Prod. Ex. 2 | - | 100 | - | - | - | - | - | - | - | - | - | - |
| | | Prod. Ex. 3 | - | - | 100 | - | - | - | - | - | - | - | - | - |
| | | Prod. Ex. 4 | - | - | - | 100 | - | - | - | - | - | - | - | - |
| | | Prod. Ex. 5 | - | - | - | - | 100 | - | - | - | - | - | - | - |
| | | Prod. Ex. 6 | - | - | - | - | - | 100 | - | - | - | - | - | - |
| | | Prod. Ex. 7 | - | - | - | - | - | - | 100 | - | - | - | - | - |
| | | Prod. Ex. 8 | - | - | - | - | - | - | - | - | - | 100 | - | - |
| | | Prod. Ex. 9 | - | - | - | - | - | - | - | - | - | - | 100 | - |
| | | Prod. Ex. 10 | - | - | - | - | - | - | - | - | - | - | - | 100 |
| | | Prod. Ex. 11 | - | - | - | - | - | - | - | - | - | - | - | - |
| | | Prod. Ex. 12 | - | - | - | - | - | - | - | - | - | - | - | - |
| | | Prod. Ex. 13 | - | - | - | - | - | - | - | - | - | - | - | - |
| | | Prod. Ex. 14 | - | - | - | - | - | - | - | - | - | - | - | - |
| | | Prod. Ex. 15 | - | - | - | - | - | - | - | - | - | - | - | - |
| | | Comp. Prod. Ex. 1 | - | - | - | - | - | - | - | - | - | - | - | - |
| | | Comp. Prod. Ex. 2 | - | - | - | - | - | - | - | - | - | - | - | - |
| | | Comp. Prod. Ex. 3 | - | - | - | - | - | - | - | - | - | - | - | - |
| | | Comp. Prod. Ex. 4 | - | - | - | - | - | - | - | - | - | - | - | - |
| | | Comp. Prod. Ex. 5 | - | - | - | - | - | - | - | - | - | - | - | - |
| | | Comp. Prod. Ex. 6 | - | - | - | - | - | - | - | - | - | - | - | - |
| | Reaction product of monocarboxylic acid having 16 or more and 28 or less carbon atoms and monoalcohol having 24 or more and 34 or less carbon atoms | Synthesis Ex. 1 | - | - | - | - | - | - | - | 10.9 | - | - | - | - |
| | Cellulose nanofibers | RHEOCRYSTA I-2SX | - | - | - | - | - | - | - | - | 0.5 | - | - | - |
| Evaluations | | Oil resistance (kit method) _10g/m² | 12 | 3 | 12 | 6 | 4 | 12 | 12 | 12 | 12 | 12 | 12 | 12 |
| | | Blocking resistance | B | A | C | A | A | B | B | A | A | B | B | B |
| | | Oil resistance (kid method) _6g/m² | 7 | - | 5 | - | - | 9 | 5 | 11 | 12 | 3 | 1 | 12 |

**Table 4**

| Ex. - Comp. Ex. No. | | | Ex. 13 | Ex. 14 | Ex. 15 | Ex. 16 | Ex. 17 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|
| Aqueous barrier coating agent | Polymer | Prod. Ex. 1 | - | - | - | - | - | - | - | - | - | - | - |
| | | Prod. Ex. 2 | - | - | - | - | - | - | - | - | - | - | - |
| | | Prod. Ex. 3 | - | - | - | - | - | - | - | - | - | - | - |
| | | Prod. Ex. 4 | - | - | - | - | - | - | - | - | - | - | - |
| | | Prod. Ex. 5 | - | - | - | - | - | - | - | - | - | - | - |
| | | Prod. Ex. 6 | - | - | - | - | - | - | - | - | - | - | - |
| | | Prod. Ex. 7 | - | - | - | - | - | - | - | - | - | - | - |
| | | Prod. Ex. 8 | - | - | - | - | - | - | - | - | - | - | - |
| | | Prod. Ex. 9 | - | - | - | - | - | - | - | - | - | - | - |
| | | Prod. Ex. 10 | - | - | - | - | - | - | - | - | - | - | - |
| | | Prod. Ex. 11 | 100 | - | - | - | - | - | - | - | - | - | - |
| | | Prod. Ex. 12 | - | 100 | - | - | - | - | - | - | - | - | - |
| | | Prod. Ex. 13 | - | - | 100 | - | - | - | - | - | - | - | - |
| | | Prod. Ex. 14 | - | - | - | 100 | - | - | - | - | - | - | - |
| | | Prod. Ex. 15 | - | - | - | - | 100 | - | - | - | - | - | - |
| | | Comp. Prod. Ex. 1 | - | - | - | - | - | 100 | - | - | - | - | - |
| | | Comp. Prod. Ex. 2 | - | - | - | - | - | - | 100 | - | - | - | - |
| | | Comp. Prod. Ex. 3 | - | - | - | - | - | - | - | 100 | - | - | - |
| | | Comp. Prod. Ex. 4 | - | - | - | - | - | - | - | - | 100 | - | - |
| | | Comp. Prod. Ex. 5 | - | - | - | - | - | - | - | - | - | 100 | - |
| | | Comp. Prod. Ex. 6 | - | - | - | - | - | - | - | - | - | - | 100 |
| | Reaction product of monocarboxylic acid having 16 or more and 28 or less carbon atoms and monoalcohol having 24 or more and 34 or less carbon atoms | Synthesis Ex. 1 | - | - | - | - | - | - | - | - | - | - | - |
| | Cellulose nanofibers | RHEOCRYSTA I-2SX | - | - | - | - | - | - | - | - | - | - | - |
| Evaluations | | Oil resistance (kit method) _10g/m² | 12 | 12 | 12 | 12 | 12 | No oil resistance | Unmeasur able | No oil resistance | No oil resistance | No oil resistance | No oil resistance |
| | | Blocking resistance | B | B | C | C | C | A | D | A | A | A | A |
| | | Oil resistance (kid method) _6g/m² | 12 | 12 | 12 | 12 | 12 | - | - | - | No oil resistance | No oil resistance | No oil resistance |

While the illustrative embodiments of the present invention are provided in the above description, such is for illustrative purpose onlu and it is only to be construed as limiting in any manner. Modification and variation of the present invention that will be obvious to those skilled in the art is to be covered by the following claims.

### Industrial Applicability

The aqueous barrier coating agent and coated paper of the present invention are suitably used, for example, in the production of packaging materials.

## Claims

1. An aqueous barrier coating agent comprising a polymer of a polymerization component containing
(meth)acrylamide,
(meth)acrylate having a straight-chain or branched alkyl group having 4 or more carbon atoms,
styrenes and/or (meth)acrylate having a cyclic alkyl group, and
a carboxyl group-containing vinyl monomer,
wherein a mass ratio of the (meth)acrylate having a straight-chain or branched alkyl group having 4 or more carbon atoms with respect to the (meth)acrylamide is 8.3 or more and 27.0 or less.

2. The aqueous barrier coating agent according to claim 1,
wherein a content ratio of the carboxy group-containing vinyl monomer with respect to 100 parts by mass of the polymerization component is 0.1 parts by mass or more and 20.0 parts by mass or less.

3. The aqueous barrier coating agent according to claim 1, further comprising
a reaction product of a monocarboxylic acid having 16 or more and 28 or less carbon atoms and a monoalcohol having 24 or more and 34 or less carbon atoms.

4. The aqueous barrier coating agent according to claim 1, further comprising cellulose nanofibers.

5. Coated paper comprising:
paper; and
a barrier coat layer disposed on one side in a thickness direction of the paper and/or the other side in the thickness direction,
wherein the barrier coat layer includes a dried product of the aqueous barrier coating agent according to any one of claims 1 to 4.
